# EUROPEAN PATENT APPLICATION

(11) **EP 1 640 492 A2**
(43) Date of publication of application: **29.03.2006**
(21) Application number: 05253392.4
(22) Date of filing: 02.06.2005
(51) Int. Cl.: D06F 37/30

(54) **Washing machine**

(30) Priority: 23.09.2004 KR 2004076577
(71) Applicant: SAMSUNG ELECTRONICS CO., LTD., Suwon-si, Gyeonggi-do 442-742 (KR)
(72) Inventor: Kim, Seon Goo, 914-904 Byeokjeokgol, Yeongton-gu,Suwon-Si,Gyeonggi-Do (KR)
(74) Representative: Davies, Robert Ean

(57) **Abstract**

A washing machine having a rotor (40) directly connected to a rotary shaft (20). The driving motor (30) includes a stator (31) mounted to an outer surface of a water tub (11), and a rotor (40) disposed around the stator (31) while being directly connected to the rotary shaft (20), which is connected to a rotary tub (12). An insertion hole (44) is formed at a center of the rotor (40), and a plurality of fitting holes (47) are formed around the insertion hole (44). At an end of the rotary shaft (20) is formed an inserting protrusion (21), which corresponds to the insertion hole (44). The rotor (40) is fixed to the rotary shaft (20) by inserting the inserting protrusion (21) through the insertion hole (44). To the rotor (40) is attached a reinforcing member (50) having a plurality of fitting protrusions (52), which vertically extend such that the fitting protrusions (47) are fitted into the fitting holes (47) of the rotor (40), respectively, such that the strength of the rotor (40) is increased.

## Description

Apparatus consistent with the present invention relate to a washing machine, and, more particularly, but not exclusively, to a washing machine having an improved fixing structure between a rotary shaft and a rotor of a driving motor, whereby the rotor is more easily and quickly fixed to the rotary shaft.

When laundry is washed by a washing machine, a rotary tub is rotated in alternating directions. When the washed laundry is dewatered by the washing machine, on the other hand, the rotary tub is rotated only in one direction at a high speed. Consequently, the rotary tub is rotatably disposed in a water tub, in which wash water is filled, and at the outside of the water tub is disposed a driving motor to rotate the rotary tub.

A washing machine is disclosed in U.S. Patent No. 6,510,716, which provides a water tub; a rotary tub rotatably disposed in the water tub while being attached to a rotary shaft extending through the water tub for washing the laundry; and a driving motor disposed at the outside of the water tub for rotating the rotary shaft and the rotary tub.

The driving motor includes a stator mounted to an outer surface of the water tub; and a rotor disposed around the stator while being connected to the rotary shaft. In an opening formed at the center of the rotor is disposed a connection member connected between the rotor and the rotary shaft for transmitting a rotating force of the rotor to the rotary shaft.

In the washing machine disclosed in the above-mentioned patent, however, the structure of the connection member is very complicated such that the rotary shaft is connected to the rotary tub with a coupling force necessary for the rotor to effectively rotate the rotary shaft and the rotary tub. Also, the connection member is fixed to the rotor by a plurality of bolts, which increases the manufacturing costs of the connection member and time necessary to assemble the connection member.
Furthermore, the rotary shaft is not directly connected to the rotor, i.e., the rotary shaft is connected to the rotor via the connection member. As a result, it is difficult to coaxially fix the rotor to the rotary shaft, and therefore, noise and vibration due to eccentricity between the rotor and the rotary shaft are generated when the rotor and the rotary shaft are rotated.

Therefore, it is an aim of embodiments of the invention to provide a washing machine having a structure in which a rotor of a driving motor is directly connected to a rotary shaft.

It is another aim of embodiments of the invention to provide a washing machine that is capable of increasing the strength of the rotor of the driving motor with a simple structure.

In accordance with one aspect, the present invention provides a washing machine comprising: a water tub; a rotary tub disposed in the water tub; a rotary shaft mounted to the rotary tub and extending through the water tub; a rotor directly connected to the end of the rotary shaft; and a reinforcing member attached to the rotor to increase the strength of the rotor.

The rotor may have a polygonal insertion hole, and the rotary shaft may have a polygonal inserting protrusion formed at the end thereof, the inserting protrusion of the rotary shaft being inserted through the insertion hole of the rotor. The reinforcing member may also have a polygonal through-hole corresponding to the insertion hole of the rotor, the inserting protrusion of the rotary shaft being inserted through the through-hole of the reinforcing member. The reinforcing member also has a plurality of fitting protrusions extending vertically from the reinforcing member, and the rotor has a plurality of fitting holes, into which the fitting protrusions of the reinforcing member are fitted, respectively, such that the reinforcing member is easily attached to the rotor.

An exemplary embodiment of the washing machine comprises: a fixing bolt threadly coupled to the inserting protrusion of the rotary shaft through the reinforcing member and the rotor from the outside of rotor. Further, the washing machine may comprise a pad disposed between the reinforcing member and a head of the fixing bolt.

In accordance with another aspect, the present invention provides a washing machine comprising: a water tub; a rotary tub disposed in the water tub; a rotary shaft mounted to the rotary tub while extending through the water tub; and a driving motor disposed at an outside of the water tub to rotate the rotary shaft, the driving motor comprising, a stator mounted to an outer surface of the water tub; a rotor disposed opposite to the stator; and a reinforcing member attached to the rotor to increase the strength of the rotor, the rotor having an insertion hole formed in a shape to prevent the rotor from rotating relative to the rotary shaft, and the rotary shaft having an inserting protrusion formed in a shape corresponding to that of the insertion hole, the inserting protrusion being arranged for insertion through the insertion hole, such that the rotary shaft is rotated along with the rotor.

Additional advantages and/or features of the invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:
FIG. 1 is a longitudinal sectional view showing a washing machine according to an exemplary embodiment of the present invention;
FIG. 2 is an enlarged sectional view showing a rotary shaft connected to a rotary tub and a driving motor to rotate the rotary shaft;
FIG. 3 is an exploded perspective view showing the fixing structure between a rotor of the driving motor and the rotary shaft;
FIG. 4 is an assembled perspective view of FIG. 3; and
FIG. 5 is a sectional view taken along the line V-V of FIG. 4.

Reference will now be made in detail to exemplary embodiments of the present invention. The embodiments described below explain the present invention with reference to the figures.

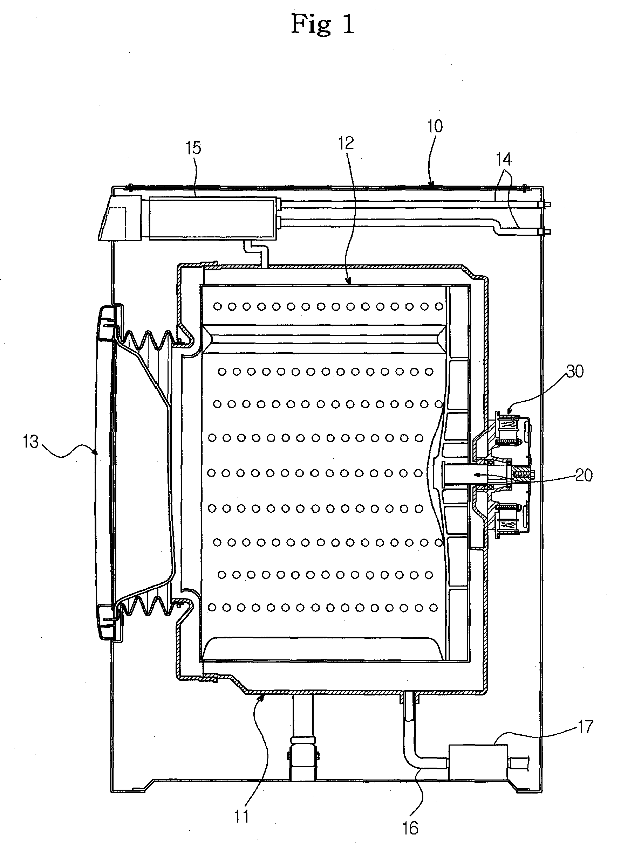

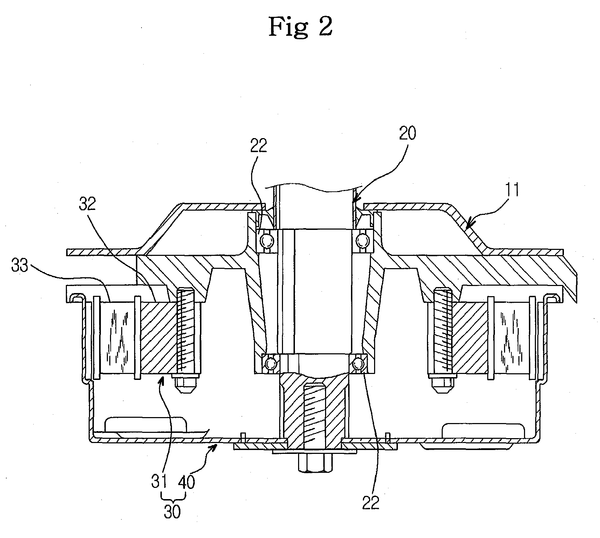

FIG. 1 is a longitudinal sectional view showing a washing machine according to an exemplary embodiment the present invention, and FIG. 2 is an enlarged sectional view showing a rotary shaft connected to a rotary tub and a driving motor to rotate the rotary shaft.

As shown in FIG. 1, the washing machine comprises a housing 10 forming the appearance of the washing machine; a water tub 11 disposed in the housing 10 for storing wash water; a rotary tub 12 rotatably disposed in the water tub 11 for washing laundry; and a door 13 hingedly attached to the front surface of the housing 10.

At the upper part of the housing 10 are disposed a water supply hose 14 to supply wash water to the water tub 11 and a detergent supply unit 15 to supply detergent to the water tub 11. At the lower part of the housing 10 are disposed a drain hose 16 and a drain pump 17 to discharge wash water in the water tub 11 out of the housing 10.

At the outside of the water tub 11 is disposed a driving motor 30 to rotate the rotary tub 12 in alternating directions. Between the rotary tub 12 and the driving motor 30 is disposed a rotary shaft 20, having one end connected to the rotary tub 12 and the other end connected to the driving motor 30, to transmit a rotating force of the driving motor 30 to the rotary tub 12. The rotary shaft 20 extends through the water tub 11.

As shown in FIG. 2, the driving motor 30 comprises a stator 31 having a ring-shaped magnetic core 32 attached to the outer surface of the water tub 11 and a coil 33 wound on the magnetic core 32; and a rotor 40 disposed around the stator 31 while being connected to the rotary shaft 20. The rotary shaft 20, having one end connected to the rotary tub 12 and the other end connected to the rotor 40, is supported by bearing members 22 disposed at the water tub 11.

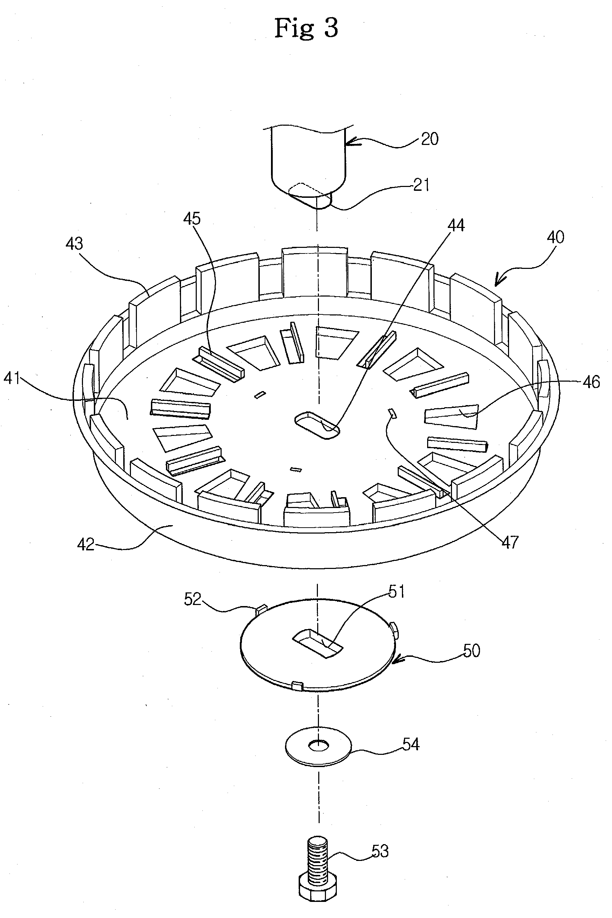

The fixing structure between the rotary shaft 20 and the rotor 40 will be described hereinafter with reference to FIGS. 3 to 5.

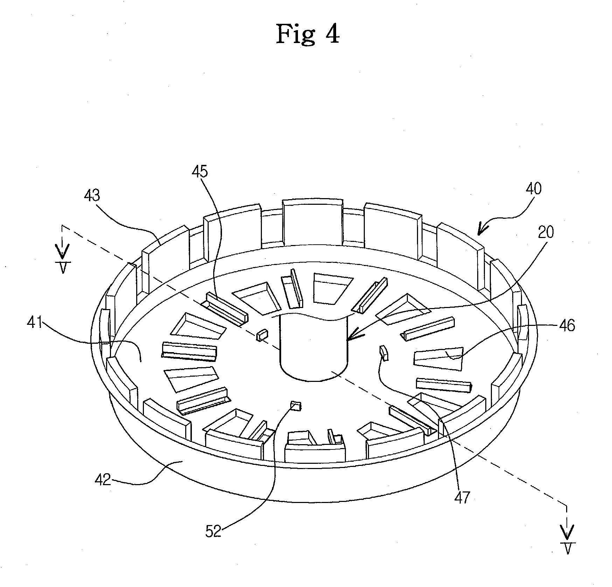

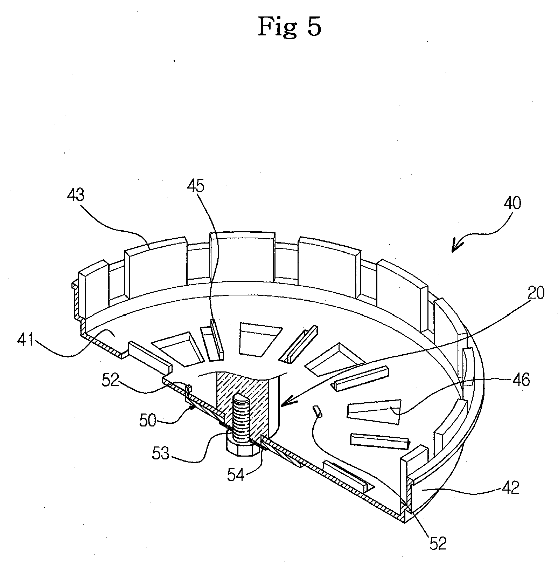

FIG. 3 is an exploded perspective view showing the fixing structure between the rotor 40 of the driving motor 30 and the rotary shaft 20, FIG. 4 is an assembled perspective view of FIG. 3, and FIG. 5 is a sectional view taken along the line V-V of FIG. 4.

As shown in FIG. 3, the rotor 40 comprises a disk-shaped base 41, to which the rotary shaft 20 is connected; an outer circumferential extension 42 vertically extending from a rim of the base 41; and a plurality of magnets 43 attached to the outer circumferential extension 42 while being spaced a predetermined distance from each other.

At the center of the base 41 of the rotor 40 is formed an insertion hole 44, through which the rotary shaft is inserted. Around the insertion hole 44 are disposed a plurality of rotary blades 45 and heat sink holes 46 in the radial direction thereof while the rotary blades 45 and the heat sink holes 46 are alternately arranged in the circumferential direction thereof.

At the end of the rotary shaft 20 is integrally formed an inserting protrusion 21, which has the same shape and size as the insertion hole 44 such that the inserting protrusion 21 is inserted through the insertion hole 44 of the base 41.

Preferably, but not necessarily, the insertion hole 44 and the inserting protrusion 21 are formed in the shape of a polygon such that the rotary shaft 20 can be rotated along with the rotor 40 when the rotor 40 is rotated after the inserting protrusion 21 is inserted through the insertion hole 44, i.e., such that the rotor is prevented from rotating relative to the rotary shaft. In this embodiment, the insertion hole 44 and the inserting protrusion 21 are approximately or substantially formed in the shape of a rectangle with two small sides being curved.

In order to effectively transmit rotating torque of the driving motor 30 to the rotary shaft 20 and the rotary tub 12 through the disk-shaped base 41 of the rotor 40, a reinforcing member 50 is attached to the outer surface of the base 41.

The reinforcing member 50 is formed in the shape of a disk. At the center of the reinforcing member 50 is formed a through-hole 51 having the same shape and size as the insertion hole 44 of the rotor 40, through which the inserting protrusion 21 of the rotary shaft 20 is inserted.

At the edge of the reinforcing member 50 are formed a plurality of fitting protrusions 52, which vertically extend, such that the reinforcing member 50 is easily attached to the base 41 of the rotor 40. At the base 41 of the rotor 40 are formed a plurality of fitting holes 47, into which the fitting protrusions 52 of the reinforcing member 50 are fitted.

When the fitting protrusions 52 of the reinforcing member 50 are fitted into fitting holes 47 of the base, respectively, from the outside of the rotor 40, the reinforcing member 50 is easily attached to the outer surface of the rotor 40 while the through-hole 51 of the reinforcing member 50 is aligned with the insertion hole 44 of the base 41.

The reinforcing member 50 is attached to the rotor 40, as described above, such that the strength of the disk-shaped base 41 of the rotor 40 is increased, whereby the rotary shaft 20 and the rotary tub 12, which are much heavier than the rotor 40, are smoothly rotated by the rotor 40.

In order to more stably fix the rotor 40 and the reinforcing member 50 to the rotary shaft 20, a fixing bolt 53 is threadly coupled into the rotary shaft 20 through the through-hole 51 of the reinforcing member 50 and the insertion hole 44 of the rotor 40 from the outside of the reinforcing member 50. Between the head of the fixing bolt 53 and the reinforcing member 50 is disposed a pad or washer 54.

The pad 54 has a size larger than the through-hole 51 of the reinforcing member 50 and the insertion hole 44 of the rotor 40. Consequently, the head of the fixing bolt 53 presses the pad 54, as the fixing bolt 53 is threadly coupled into the rotary shaft 20, and therefore, the rotor 40 and the reinforcing member 50 are securely fixed to the rotary shaft 20.

Alternatively, the inserting protrusion 21 of the rotary shaft 20 may be forcibly fitted into the through-hole 51 of the reinforcing member 50 through the insertion hole 44 of the rotor 40, and the fitting protrusions 52 of the reinforcing member 50 may be forcibly fitted into the fitting holes 47 of the base 41 of the rotor 40, respectively. In this case, the fixing bolt 53 and the pad 54 are not necessary.

When the inserting protrusion 21 of the rotary shaft 20 is inserted through the insertion hole 44 formed at the center of the base 41 of the rotor 40, and the fitting protrusions 52 of the reinforcing member 50 are fitted into the corresponding fitting holes 47 of the base 41 from the outside of the rotor 40, as shown in FIGS. 4 and 5, the inserting protrusion 21 of the rotary shaft 20 is inserted through the through-hole 51 of the reinforcing member 50.

Subsequently, the fixing bolt 53 with the pad 54 fitted thereon is threadly coupled into the rotary shaft 20 through the through-hole 51 and the insertion hole 44 from the outside of the reinforcing member 50. As a result, the rotor 40 and the reinforcing member 50 are securely fixed to the rotary shaft 20. When the driving motor 30 is operated in this state, the rotor 40, whose strength is increased by the reinforcing member 50, is rotated, and therefore, the rotary shaft 20 and the rotary tub 12 are smoothly rotated.

As apparent from the above description, the rotor of the driving motor is directly connected to the rotary shaft. Consequently, embodiments of the present invention have the effect of reducing manufacturing costs and assembling time. Also, the rotor is coaxially fixed to the rotary shaft, and therefore, noise and vibration are not generated, or at least minimised, when the rotor and the rotary shaft are rotated.

Furthermore, the strength of the rotor at the position where the rotor is fixed to the rotary shaft is increased by the reinforcing member that is easily attached to the rotor, and therefore, the rotary shaft and the rotary tub are smoothly rotated by the rotor.

Although exemplary embodiments of the present invention have been shown and described, it would be appreciated by those skilled in the art that changes may be made in these embodiments without departing from the principles and spirit of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A washing machine comprising:
a water tub (11);
a rotary tub (12) disposed in the water tub;
a rotary shaft (20) which is mounted to the rotary tub (12) and extends through the water tub (11);
a rotor (40) directly connected to an end of the rotary shaft (20); and
a reinforcing member (50) attached to the rotor, which increases the strength of the rotor.

2. The washing machine according to claim 1, wherein the rotor (40) has a polygonal insertion hole (44), and the rotary shaft (20) has a polygonal inserting protrusion (21) formed at the end thereof, the inserting protrusion (21) of the rotary shaft being arranged for insertion through the insertion hole (44) of the rotor (40).

3. The washing machine according to claim 2, wherein the reinforcing member (50) has a polygonal through-hole (51) corresponding to the insertion hole (54) of the rotor, the inserting protrusion (21) of the rotary shaft (20) being arranged for insertion through the through-hole (51) of the reinforcing member (50).

4. The washing machine according to claim 2 or 3, wherein the reinforcing member (50) has a plurality of fitting protrusions (52) which extend vertically from the reinforcing member, and the rotor (40) has a plurality of fitting holes (47), into which the fitting protrusions (52) of the reinforcing member are arranged to be fitted, respectively, such that the reinforcing member is easily attached to the rotor.

5. The washing machine according to any preceding claim , further comprising: a fixing bolt (53_) threadly coupled to the inserting protrusion (21) of the rotary shaft (20) through the reinforcing member (50) and the rotor (40) from outside of the rotor.

6. The washing machine according to claim 5, further comprising: a pad (54) disposed between the reinforcing member (50) and a head of the fixing bolt (53).

7. The washing machine according to any preceding claim , further comprising: a stator (31) mounted to an outer surface of the water tub (11) while the stator (31) is opposite to the rotor (40).

8. A washing machine comprising:
a water tub (11); a rotary tub (12) disposed in the water tub; a rotary shaft (20) mounted to the rotary tub (12) while extending through the water tub (11); and a driving motor (30) disposed at an outside of the water tub (11) to rotate the rotary shaft (20), the driving motor (30) comprising,
a stator (31) mounted to an outer surface of the water tub (11); a rotor (40) disposed opposite to the stator (31); and a reinforcing member (50) attached to the rotor (40) to increase the strength of the rotor,
the rotor (40) having an insertion hole (44) formed in a shape to prevent the rotor (40) from rotating relative to the rotary shaft (20), and
the rotary shaft (20) having an inserting protrusion (21) formed in a shape corresponding to that of the insertion hole (44), the inserting protrusion (21) being arranged for insertion through the insertion hole (44), such that the rotary shaft (20) is rotated along with the rotor (40).

9. The washing machine according to claim 8, wherein the insertion hole (44) of the rotor and the inserting protrusion (21) of the rotary shaft are substantially formed in the shape of a rectangle.

10. The washing machine according to claim 8 or 9, wherein the reinforcing member (50) has a through-hole (51) formed in a shape corresponding to the insertion hole (44) of the rotor such that the reinforcing member (50) is fixed to the rotary shaft (20).

11. The washing machine according to claim 10, wherein the reinforcing member (50) has a plurality of fitting protrusions (52) protruded from an edge of the reinforcing member, and the rotor (40) has a plurality of fitting holes (47), into which the fitting protrusions of the reinforcing member are fitted, respectively.

12. The washing machine according to claim 10 or 11, further comprising a fixing bolt (53) threadly coupled to the inserting protrusion (21) of the rotary shaft through the reinforcing member and the rotor from outside of the rotor.

13. The washing machine according to claim 12, further comprising a pad (54) disposed between the reinforcing member (50) and a head of the fixing bolt (50).
